# EUROPEAN PATENT APPLICATION

(11) **EP 2 666 757 A1**
(43) Date of publication of application: **27.11.2013**
(21) Application number: 12736685.4
(22) Date of filing: 17.01.2012
(51) Int. Cl.: C03C 27/12, B32B 17/10, B60J 1/00

(54) **LAMINATED GLASS AND PROCESS FOR PRODUCING LAMINATED GLASS**

(30) Priority: 18.01.2011 JP 2011007928
(71) Applicant: Asahi Glass Company, Limited, Tokyo 100-8405 (JP)
(72) Inventor: TOMIDA, Michihisa, Tokyo 100-8405 (JP); AOKI, Tokihiko, Tokyo 100-8405 (JP); KURIHARA, Kazuyuki, Tokyo 100-8405 (JP)
(74) Representative: Müller-Boré & Partner Patentanwälte
(86) International application number: PCT/JP2012/050863
(87) International publication number: WO 2012/099124

(57) **Abstract**

To provide a laminated glass having a high infrared reflecting performance while retaining a reflected color to be neutral, and a process for producing such a laminated glass. The laminated glass of the present invention comprises two glass sheets, and an interlayer and a laminate having a heat ray reflecting function, interposed between the two glass sheets, wherein a high refractive index film is provided between the two glass sheets besides films that constitute the laminate having a heat ray reflecting function. The high refractive index film has a refractive index of at least 1.90 at a wavelength of 550 nm and contains at least any one of titanium oxide, zinc oxide, tantalum oxide, zirconium oxide, niobium oxide, tin oxide, titanium nitride, silicon nitride, zirconium nitride, aluminum nitride, titanium oxynitride, zirconium oxynitride and tin oxynitride.

## Description

### TECHNICAL FIELD

The present invention relates to a laminated glass and a process for producing a laminated glass.

### BACKGROUND ART

In order to prevent global warming, it is attempted to refrain from cooling by e.g. an air conditioner. Therefore, in order to prevent entry of heat by sunlight, a window having a function to reflect infrared rays is desired. In order to realize such a function, a laminate of silver or a laminate of dielectrics having different refractive indices, has been used. Infrared rays are electromagnetic waves having a wavelength of at least about 800 nm. If it is attempted to selectively reflect such a wavelength region intensely, even a reflected color tends to be reddish in many cases. Accordingly, it is very difficult to obtain a strong infrared ray-reflecting performance while retaining the reflected color to be neutral. In Patent Document 1, a reflected color having the redness suppressed, is realized.

### PRIOR ART DOCUMENT

### PATENT DOCUMENT

Patent Document 1: JP-A-2000-229376

### DISCLOSURE OF INVENTION

### TECHNICAL PROBLEM

However, in Patent Document 1, the material is limited, and the solar reflectance Re is at a level of 35%, whereby there is a problem that the essential performance of a heat ray reflecting laminate is not sufficiently obtainable.

It is an object of the present invention to provide a laminated glass which has a solar reflectance Re of at least 36%, a sufficient heat ray reflecting function and a reflected light having redness suppressed, particularly an optical characteristic such that the chromaticity a* is less than 3, and which is suitable as a window glass for automobiles, other various vehicles, etc.

### SOLUTION TO PROBLEM

A laminated glass according to one embodiment of the present invention comprises two glass sheets and, disposed therebetween, an interlayer and a laminate having a heat ray reflecting function, wherein between the two glass sheets, a high refractive index film is further provided besides films that constitute the laminate having a heat ray reflecting function.

A process for producing a laminated glass according to one embodiment of the present invention comprises a step of preparing a first glass sheet, a step of preparing a second glass sheet, a step of preparing an interlayer, a step of forming a laminate having a heat ray reflecting function on a substrate, a step of forming a high refractive index film on one surface of the first glass sheet, and a step of interposing the interlayer and the laminate between the first glass sheet and the second glass sheet, so as to face the high refractive index film, followed by lamination processing.

### ADVANTAGEOUS EFFECTS OF INVENTION

According to the present invention, it is possible to provide a laminated glass having a high infrared reflecting performance while retaining a reflected color to be neutral, and a process for producing such a laminated glass.

### BRIEF DESCRIPTION OF DRAWINGS

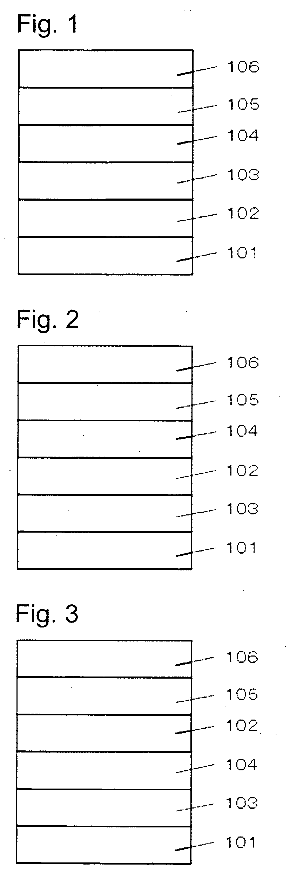

Fig. 1 is a block diagram illustrating a first embodiment of a construction of a laminated glass of the present invention.
Fig. 2 is a block diagram illustrating a second embodiment of a construction of a laminated glass of the present invention.
Fig. 3 is a block diagram illustrating a third embodiment of a construction of a laminated glass of the present invention.

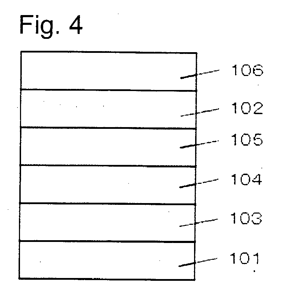

Fig. 4 is a block diagram illustrating a fourth embodiment of a construction of a laminated glass of the present invention.

### DESCRIPTION OF EMBODIMENTS

Now, the laminated glass of the present invention will be described with reference to the drawings. It should be understood, however, that the present invention is by no means limited to such embodiments or examples, and such embodiments or examples may be changed or modified without departing from the concept and scope of the present invention.

The laminated glass of the present invention comprises two glass sheets and, disposed therebetween, an interlayer and a laminate having a heat ray reflecting function, wherein between the two glass sheets, a high refractive index film is further provided besides films that constitute the laminate having a heat ray reflecting function. Here, the high refractive index film besides films that constitute the laminate having a heat ray reflecting function, may take a form wherein the high refractive index film and the laminate having a heat ray reflecting function are laminated via an interlayer, as separate layers, or a form wherein the high refractive index film and the laminate having a heat ray reflecting function are laminated directly and in this case, a film having a refractive index lower than the high refractive index film is laminated at the outermost surface of the laminate having a heat ray reflecting function.

### (Glass sheets)

As the first and second glass sheets to be used for the laminated glass of the present invention, glass sheets made of an inorganic material which are used as window glasses for buildings or vehicles such as automobiles, electric cars, aircrafts, etc. may suitably be selected for use depending upon the particular purpose. Further, they may be not only narrowly defined glass sheets made of inorganic materials, but also so-called organic glass sheets made of plastics (broad-sense glass sheets including organic glasses). Glass sheets made of plastics may, for example, be sheets made of e.g. a polycarbonate, a polypropylene, a polystyrene, an acrylic resin, a methacrylic resin, etc. The narrowly defined glass sheets made of inorganic materials may, for example, be transparent soda lime silica glass having no colorant incorporated, or colored transparent glass or deeply colored transparent glass which is colored to have a desired color such as bronze, grey or blue by a suitable colorant.

A green colored transparent glass as a colored transparent glass may, for example, be soda lime silica glass containing iron. That is, it is, for example, soda lime silica glass containing from 0.3 to 1% of total iron as calculated as Fe₂O₃, as represented by mass percentage, in a soda lime silica type matrix glass. Further, with respect to the absorption of light with a wavelength within a near infrared region, the absorption by bivalent iron is predominant among the total iron. Accordingly, it is further preferred that the mass of FeO (bivalent iron) as calculated as Fe₂O₃ is from 20 to 40% in the mass of the total iron as calculated as Fe₂O₃. In order to impart an ultraviolet-absorbing performance, it may, for example, be mentioned to add e.g. cerium to a soda lime silica type matrix glass. Specifically, it is preferred to use soda lime silica glass having substantially the following composition as represented by mass percentage as calculated as oxides.

SiO₂: from 65 to 75%, Al₂O₃: from 0.1 to 5%, Na₂O+K₂O: from 10 to 18%, CaO: from 5 to 15%, MgO: from 1 to 6%, total iron calculated as Fe₂O₃: from 0.3 to 1%, total cerium calculated as CeO₂ and/or TiO₂: from 0.5 to 2%.

The deeply colored transparent glass is not particularly limited, and it may, for example, be soda lime silica glass containing iron at a high concentration.

The expression "to " showing the above numerical value range is used to include the numerical values before and after "to " as the lower limit value and the upper limit value, and hereinafter in this specification "to " is used to have the same meaning, unless otherwise specified.

In the case of a narrowly defined glass sheet made of an inorganic material, such a glass sheet may be one having chemical tempering, physical tempering or chemical and physical tempering applied thereto.

### (Interlayer)

The interlayer to be used for the laminated glass of the present invention contains a thermoplastic resin. The thermoplastic resin is not particularly limited, and it may, for example, be a polyvinyl acetal resin, an ethylene/vinyl acetate copolymer resin, an ethylene/acrylic copolymer resin, a polyurethane resin, a sulfur element-containing polyurethane resin or a polyvinyl alcohol resin. Among them, a polyvinyl acetal resin is preferred, since when used in combination with a plasticizer, it is possible to obtain an interlayer for laminated glass showing excellent adhesion to glass.

The polyvinyl acetal resin is not particularly limited so long as it is a polyvinyl resin obtainable by acetalization of a polyvinyl alcohol by an aldehyde, and a polyvinyl butyral resin is preferred. Further, two or more vinyl acetal resins may be used in combination, as the case requires. A preferred lower limit for the acetalization degree of the above polyvinyl acetal resin is 40 mol%, and a preferred upper limit is 85 mol%. A more preferred lower limit is 60 mol%, and a more preferred upper limit is 75 mol%.

In a case where a polyvinyl butyral resin is used as the above polyvinyl acetal resin, a preferred lower limit for the amount of hydroxy groups is 15 mol%, and a preferred upper limit is 35 mol%. If the amount of hydroxy groups is less than 15 mol%, the adhesion between the glass and the interlayer for laminated glass is likely to decrease, or the penetration resistance of the obtainable laminated glass is likely to decrease. If the amount of hydroxy groups exceeds 35 mol%, the obtainable interlayer for laminated glass is likely to be too hard.

The polyvinyl acetal resin can be prepared by acetalization of a polyvinyl alcohol by an aldehyde. Such a polyvinyl alcohol is usually obtained by saponifying a polyvinyl acetate, and a polyvinyl alcohol having a saponification degree of from 80 to 99.8 mol% is usually employed. A preferred lower limit for the polymerization degree of the polyvinyl alcohol is 500, and a preferred upper limit is 4,000. If the polymerization degree of the polyvinyl alcohol is less than 500, the penetration resistance of the obtainable laminated glass is likely to decrease. If the polymerization degree of the polyvinyl alcohol exceeds 4,000, shaping of the interlayer for laminated glass is likely to be difficult. A more preferred lower limit for the polymerization degree of the polyvinyl alcohol is 1,000, and a more preferred upper limit is 3,600.

The above aldehyde is not particularly limited, but usually, a C₁₋₁₀ aldehyde is preferably used. The C₁₋₁₀ aldehyde is not particularly limited, and it may, for example, be n-butyl aldehyde, isobutyl aldehyde, n-valeraldehyde, 2-ethylbutyl aldehyde, n-hexyl aldehyde, m-octyl aldehyde, n-nonyl aldehyde, n-decyl aldehyde, formaldehyde, acetaldehyde or benzaldehyde. Among them, n-butyl aldehyde, n-hexyl aldehyde or n-valeraldehyde is preferred, and n-butyl aldehyde is more preferred. These aldehydes may be used alone, or two or more of them may be used in combination.

Further, the interlayer of the present invention may further contain a plasticizer. When it contains a plasticizer, the obtainable interlayer for laminated glass becomes flexible and may present high adhesion to glass. Such a plasticizer may, for example, be triethylene glycol di-2-ethyl butyrate, triethylene glycol di-2-ethyl hexanoate, triethylene glycol dicaprylate, triethylene glycol di-n-octanoate, triethylene glycol di-n-heptanoate, tetraethylene glycol di-n-heptanoate, tetraethylene glycol di-2-ethyl hexanoate, dibutyl sebacate, dioctyl azelate, dibutyl carbitol adipate, ethylene glycol di-2-ethyl butyrate, 1,3-propylene glycol di-2-ethyl butyrate, 1,4-butylene glycol di-2-ethyl butyrate, 1,2-butylene glycol di-2-ethyl butyrate, diethylene glycol di-2-ethyl butyrate, diethylene glycol di-2-ethyl hexanoate, dipropylene glycol di-2-ethyl butyrate, triethylene glycol di-2-ethyl pentanoate, tetraethylene glycol di-2-ethyl butyrate, diethylene glycol dicaprylate, triethylene glycol di-n-heptanoate, tetraethylene glycol din-heptanoate, triethylene glycol di-2-ethyl butyrate, triethylene glycol bis(2-ethyl butyrate), triethylene glycol diheptanoate, tetraethylene glycol diheptanoate, dihexyl adipate, dioctyl adipate, hexylcyclohexyl adipate, diisononyl adipate heptylnonyl adipate, dibutyl sebacate, oil-modified alkyd sebacate, a mixture of a phosphoric acid ester and an adipic acid ester, a mixed-type adipic acid ester prepared from an adipic acid ester, a C₄₋₉ alkyl alcohol and a C₄₋₉ cyclic alcohol, or a C₆₋₈ adipic acid ester such as hexyl adipate. Among the above plasticizers, triethylene glycol di-2-ethyl hexanoate (3GO) is particularly preferably used.

The content of the above plasticizer is not particularly limited. However, a preferred lower limit is 30 parts by weight, and a preferred upper limit is 70 parts by weight, per 100 parts by weight of the above thermoplastic resin. If the content of the plasticizer is less than 30 parts by weight, the interlayer of laminated glass tends to be too hard, whereby the handling efficiency may deteriorate. If the content of the plasticizer exceeds 70 parts by weight, the plasticizer is likely to be separated from the interlayer for laminated glass. A more preferred lower limit for the content of the plasticizer is 35 parts by weight, and a more preferred upper limit is 63 parts by weight.

The surface of the interlayer to be used for the laminated glass of the present invention may be flat or embossed. Further, the interlayer may have various functions such as ultraviolet absorption, anti-oxidation, photostabilization, frame retardancy, antistatic performance, adhesion-adjustment, moisture resistance, infrared shielding, etc. For example, infrared-shielding fine particles may be dispersed and blended in order to impart the infrared-shielding function to the interlayer. The material for such infrared-shielding fine particles may, for example, be a metal such as Re, Hf, Nb, Sn, Ti, Si, Zn, Zr, Fe, Al, Cr, Co, Ce, In, Ni, Ag, Cu, Pt, Mn, Ta, W, V or Mo, or an oxide, nitride, sulfide or silicon compound of such a metal, or inorganic fine particles having Sb or F doped to such a compound. Such fine particles may be used as a single material or a composite material. Further, it is effective to use a mixture having such a single material or composite material blended to an organic resin or a coated product having such a single material or composite material with an organic resin material, for example, in order to obtain various performances required for e.g. automobiles. Further, as infrared-shielding fine particles, a phthalocyanine type organic infrared-absorbing agent may also be used. On the other hand, as infrared-shielding fine particles, at least one or both of antimony-doped tin oxide (ATO) fine particles and tin-doped indium oxide (ITO) fine particles may be used. ATO fine particles and ITO fine particles are excellent in the infrared-shielding performance, and by a small amount of their addition to the interlayer, a desired infrared-shielding performance can be realized. Further, ITO fine particles are superior to ATO fine particles in the infrared-shielding performance, and therefore, it is particularly preferred to use ITO fine particles as infrared-shielding fine particles.

Further, the interlayer having an infrared shielding function absorbs visible light and infrared light. Therefore, in order to maximize the effects of the present invention, the infrared-shielding interlayer is preferably disposed inside of a window glass than the high refractive index film and the laminate having a heat ray reflecting function.

### (Laminate having heat ray reflective function)

The laminate having a heat ray reflecting function of the present invention is a multi-layered structure having a metal compound film and a metal film alternately laminated from a glass sheet side or from a substrate side in a total of (2n+1) layers (wherein n is an integer of at least 1). Here, the metal films are preferably provided to be from 2 to 8 layers, more preferably from 2 to 6 layers. When the metal films are at least two layers, it is possible to obtain a sufficient heat ray reflecting performance, and when they are at most 8 layers, it is possible to prevent an increase of the internal stress of the laminate. Further, the uppermost layer and the lowermost layer of the laminate having a heat ray reflecting function are preferably metal compound films.

The laminate having a heat ray reflecting function in the present invention refers to the multi-layered structure itself as described above, and such a laminate having a heat ray reflecting function may, for example, be formed on a glass sheet surface or on a substrate such as a plastic film prepared separately from the glass sheet.

Pluralities of metal compound layers and metal layers in the multi-layered structure having a metal compound film and a metal film alternately laminated in a total of (2n+1) layers (wherein n is an integer of at least 1) may, respectively, be formed by the same material, or partly made of different materials, or totally made of different materials.

### (Metal compound film)

The metal compound film in the laminate having a heat ray reflecting function may typically be a compound (metal oxide) of oxygen and a metal element such as zinc, tin, aluminum, titanium, zirconium, tantalum, niobium or silicon, or a compound (metal nitride) of nitrogen and such a metal element. The refractive index as a metal compound film in the laminate having a heat ray reflecting function, is preferably from 1.5 to 3.0, particularly preferably from 1.8 to 2.6. Particularly preferred is a film which contains a high refractive index metal compound having a refractive index of at least 2.0 and zinc oxide (refractive index: 2.0) as the main components and which has a refractive index of from 1.8 to 2.6. Further, such a metal compound film preferably contains at least 90 mass%, more preferably contains at least 95 mass%, particularly preferably contains at least 99 mass%, in total of zinc oxide and the high refractive index metal compound having a refractive index of at least 2.0. Among high refractive index metal compounds having a refractive index of at least 2.0, titanium oxide (refractive index: 2.5) and/or niobium oxide (refractive index: 2.4) are particularly preferred, since the reflection band can be more broadened. In the present invention, "refractive index" means a refractive index at a wavelength of 550 nm.

By the presence of the high refractive index metal compound, the refractive index of the metal compound film can be made high, and it is possible to broaden the transmission-reflection band of the laminate. In the metal compound film, the proportion of the metal of the high refractive index metal compound is preferably from 1 to 50 atomic%, particularly preferably from 5 to 20 atomic%, based on the sum of the metal and zinc. Within such a range, it is possible to maintain the transmission-reflection band to be broad, and at the same time, the moisture resistance will be excellent. The reason for this effect is not clearly understood but is considered to be such that within this range, it is possible to relax the stress between the metal compound film and the metal film while maintaining the good physical properties of zinc oxide.

The metal compound film may contain a metal compound other than zinc oxide, titanium oxide and niobium oxide within a range not to impair the physical properties. For example, for the purpose of imparting an electrical conductivity, gallium oxide, indium oxide, aluminum oxide, magnesium oxide or tin oxide may, for example, be contained.

The geometric film thickness (hereinafter referred to simply as the film thickness) of the metal compound film is preferably from 20 to 60 nm (particularly preferably from 30 to 50 nm) in the case of a metal compound film closest to a glass sheet (i.e. in a case where the laminated glass is fit in a window of an automobile or other vehicles, a metal compound film in contact with the glass sheet on the exterior side or on the interior side) and a metal compound film furthest from the glass sheet, and it is preferably from 40 to 120 nm (particularly preferably from 40 to 100 nm) in the case of other metal compound films.

### (Metal film)

The metal film is a layer containing silver or a silver alloy as the main component. As the metal film is formed of silver or a silver alloy, the electrical resistance of the laminate can be made low. With a view to lowering the electrical resistance of the laminate, the metal film is preferably a layer made of pure silver. In the present invention, "pure silver" means that silver is contained in an amount of at least 99.9 mass% in the metal film (100 mass%).

Otherwise, with a view to preventing diffusion of silver thereby to increase the moisture resistance, the metal film is preferably a layer made of a silver alloy containing gold and/or bismuth. The total of gold and/or bismuth is preferably from 0.2 to 1.5 mass% in the metal layer (100 mass%) to bring the specific resistance to be at most 4.5 µΩcm.

The total film thickness of the metal film is preferably from 25 to 60 nm (particularly preferably from 25 to 50 nm) in a case where the objective electrical resistance of the obtainable laminate is set to be 1.5 Ω, and it is preferably from 35 to 80 nm (particularly preferably from 35 to 70 nm) in a case where the objective electrical resistance is set to be 0.9 Ω. For the film thicknesses of the respective metal films, the above total film thickness is suitably divided by the number of metal layers. Here, as the number of metal layers increases, the specific resistance of each metal film increases, and in order to lower the resistance, the total film thickness tends to be large.

### (High refractive index film besides films that constitute the laminate having heat ray reflecting function)

The high refractive index film besides films that constitute the laminate having a heat ray reflecting function of the present invention (hereinafter referred to as the high refractive index film) has a refractive index of at least 1.90, preferably from 1.90 to 2.60, particularly preferably from 2.00 to 2.55, at a wavelength of 550 nm.

The high refractive index film is preferably made of at least one member selected from the group consisting of titanium oxide, zinc oxide, tantalum oxide, zirconium oxide, niobium oxide, tin oxide, titanium nitride, silicon nitride, zirconium nitride, aluminum nitride, titanium oxynitride, zirconium oxynitride and tin oxynitride. As a high refractive index inorganic material, titanium oxide, zirconium oxide or titanium oxynitride is particularly preferred.

The geometric film thickness of the high refractive index film is preferably from 10 to 100 nm, particularly preferably from 30 to 70 nm.

The laminated glass of the present invention includes an embodiment wherein the high refractive index film and the laminate having a heat ray reflecting function are in contact with each other. In such an embodiment, irrespective of whether or not a high refractive index metal compound is contained in the laminate having a heat ray reflecting function, the high refractive index film is separately present in contact with the laminate having a heat ray reflecting function. Further, in such an embodiment, the uppermost layer of films that constitute the laminate having a heat ray reflecting function, has a refractive index smaller than the high refractive index film formed separately in contact therewith.

### (Construction)

The high refractive index film of the present invention may be provided at any position between the glass sheets. However, with a view to improving the reflection performance, it is better close to the glass sheet closest to sunlight. For example, in the case of a laminated glass to be used for a window of an automobile or other vehicles, it is preferably provided on the exterior side of the glass sheet on the exterior side of the laminated glass.

The high refractive index film of the present invention is preferably provided inside of the laminated glass in contact with either one of the two glass sheets constituting the laminated glass.

With respect to the construction of the laminated glass of the present invention, the following constructions may, for example, be mentioned. In the following constructions, G represents a glass sheet. Further, needless to say, the laminated glass of the present invention is not limited to the following constructions. Here, G101 represents a glass sheet closest to the sunlight.
(1) G101/high refractive index film 102/interlayer 103/laminate 104 having heat ray reflecting function/interlayer 105/G106
(2) G101/interlayer 103/high refractive index film 102/laminate 104 having heat ray reflecting function/interlayer 105/G106
(3) G101/interlayer 103/laminate 104 having heat ray reflecting function/high refractive index film 102/interlayer 105/G106
(4) G101/interlayer 103/laminate 104 having heat ray reflecting function/interlayer 105/high refractive index film 102/G106

Further, the present invention is effective when combined with a member which is likely to be degraded by infrared light, such as a photochromatic element.

### (Optical properties)

In order to obtain a high infrared reflection performance, the solar reflectance Re of the laminated glass of the present invention is preferably at least 36%, more preferably at least 40%, further preferably at least 44%. Further, in order to realize a reflected color having redness suppressed, the chromaticity a* as defined in JIS Z8729 is preferably less than 3, more preferably negative. Further, as a result of simulation twice of the above construction (2) Re: 43.8%·a*: -0.15, Re: 45.3%·a*: -0.42.

### (Production process)

The process for producing a laminated glass of the present invention comprises a step of preparing a first glass sheet, a step of preparing a second glass sheet, a step of preparing an interlayer, a step of forming a laminate having a heat ray reflecting function on a substrate, a step of forming a high refractive index film on one surface of the first glass sheet, and a step of interposing the interlayer and the laminate between the first glass sheet and the second glass sheet, so as to face the high refractive index film, followed by lamination processing for integration such as thermal compression bonding processing to bond them to form a laminated glass. Here, as the lamination processing, various lamination processings in the conventional production of laminated glasses may be employed.

The process for producing a laminated glass of the present invention has been described by using expressions of "first glass substrate" and "second glass substrate", but in such a description, the first glass substrate may be substituted by the second substrate, or the second glass substrate may be substituted by the first glass substrate, to likewise accomplish the present invention.

### EXAMPLES

### (Example 1)

Now, Example 1 will be described.

### <Heat ray reflecting laminate>

Firstly, dry cleaning by an ion beam was carried out as follows for the purpose of cleaning the surface of a polyethylene terephthalate film (PET film) having a thickness of 100 µm as a substrate. Firstly, about 30% of oxygen was mixed to argon gas, and an electric power of 100 W was applied. The substrate surface was irradiated with argon ions and oxygen ions ionized by the ion beam sources.

Then, on the PET film substrate surface having the dry cleaning treatment applied, an oxide layer of a zinc oxide/titanium oxide mixture having a thickness of 35 nm (i.e. a first metal compound film) was formed by carrying out pulse sputtering under a pressure of 0.73 Pa at a frequency of 50 kHz at a power density of 4.5 W/cm² with a reverse pulse width of 2 µsec by using a mixed target of zinc oxide and titanium oxide [zinc oxide:titanium oxide=80:20 (mass ratio)] and introducing argon gas having 10 vol% of oxygen gas mixed. As measured by a Rutherford backscattering method, in this oxide layer, zinc was 80 atomic%, and titanium was 20 atomic%, in the total of zinc and titanium (100 atomic%). Further, in this oxide layer, zinc was 34.3 atomic%, titanium was 8.0 atomic% and oxygen was 57.7 atomic%, in the total of all atoms (100 atomic%). When they were calculated as ZnO and TiO₂, the total of such oxides was 96.7 mass%.

Then, a first metal layer having a thickness of 10 nm was formed by carrying out pulse sputtering under a pressure of 0.73 Pa at a frequency of 50 kHz at a power density of 2.3 W/cm² with a reverse pulse width of 10 µsec by using a silver alloy target doped with 1.0 mass% of gold and introducing argon gas.

Then, a zinc oxide film having a thickness of 5 nm (barrier layer) was formed by carrying out pulse sputtering under a pressure of 0.45 Pa at a frequency of 50 kHz at a power density of 2.7 W/cm² with a reverse pulse width of 2 µsec by using a zinc oxide target doped with 5 mass% of alumina and introducing argon gas.

Then, a zinc oxide/titanium oxide mixed film having a thickness of 65 nm was formed by carrying out pulse sputtering under a pressure of 0.73 Pa at a frequency of 50 kHz at a power density of 4.5 W/cm² with a reverse pulse width of 2 µsec by using a mixed target of zinc oxide and titanium oxide [zinc oxide:titanium oxide=80:20 (mass ratio)] and introducing argon gas having 10 vol% of oxygen gas mixed. By the zinc oxide film and the zinc oxide/titanium oxide mixed film thus obtained, an oxide layer (i.e. a second metal compound film) was formed.

Then, a second metal layer having a thickness of 14 nm was formed by carrying out pulse sputtering under a pressure of 0.73 Pa at a frequency of 50 kHz at a power density of 2.3 W/cm² with a reverse pulse width of 10 µsec by using a silver alloy target doped with 1.0 mass% of gold and introducing argon gas.

Then, a zinc oxide film (barrier layer) having a thickness of 5 nm was formed by carrying out pulse sputtering under a pressure of 0.45 Pa at a frequency of 50 kHz at a power density of 2.7 W/cm² with a reverse pulse width of 2 µsec by using a zinc oxide target doped with 5 mass% of alumina and introducing argon gas.

Then, a zinc oxide/titanium oxide mixed film having a thickness of 65 nm was formed by carrying out pulse sputtering under a pressure of 0.73 Pa at a frequency of 50 kHz at a power density of 4.5 W/cm² with a reverse pulse width of 2 µsec by using a mixed target of zinc oxide and titanium oxide [zinc oxide:titanium oxide=80:20 (mass%)] and introducing argon gas having 10 vol% of oxygen gas mixed. By the zinc oxide film and the zinc oxide/titanium oxide mixed film thus obtained, an oxide layer (i.e. a third metal compound film) was formed.

Then, a third metal layer having a thickness of 14 nm was formed by carrying out pulse sputtering under a pressure of 0.73 Pa at a frequency of 50 kHz at a power density of 2.3 W/cm² with a reverse pulse width of 10 µsec by using a silver alloy target doped with 1.0 mass% of gold and introducing argon gas.

Then, a zinc oxide film (barrier layer) having a thickness of 5 nm was formed by carrying out pulse sputtering under a pressure of 0.45 Pa at a frequency of 50 kHz at a power density of 2.7 W/cm² with a reverse pulse width of 2 µsec by using a zinc oxide target doped with 5 mass% of alumina and introducing argon gas.

Then, a zinc oxide/titanium oxide mixed film having a thickness of 65 nm was formed by carrying out pulse sputtering under a pressure of 0.73 Pa at a frequency of 50 kHz at a power density of 4.5 W/cm² with a reverse pulse width of 2 µsec by using a mixed target of zinc oxide and titanium oxide [zinc oxide:titanium oxide=80:20 (mass ratio)] and introducing argon gas having 10 vol% of oxygen gas mixed. By the zinc oxide film and the zinc oxide/titanium oxide mixed film thus obtained, an oxide layer (i.e. a fourth metal compound film) was formed.

Then, a fourth metal layer having a thickness of 10 nm was formed by carrying out pulse sputtering under a pressure of 0.73 Pa at a frequency of 50 kHz at a power density of 2.3 W/cm² with a reverse pulse width of 10 µsec by using a silver alloy target doped with 1.0 mass% of gold and introducing argon gas.

Then, a zinc oxide film (barrier layer) having a thickness of 5 nm was formed by carrying out pulse sputtering under a pressure of 0.45 Pa at a frequency of 50 kHz at a power density of 2.7 W/cm² with a reverse pulse width of 2 µsec by using a zinc oxide target doped with 5 mass% of alumina and introducing argon gas.

Then, a zinc oxide/titanium oxide mixed film having a thickness of 30 nm was formed by carrying out pulse sputtering under a pressure of 0.73 Pa at a frequency of 50 kHz at a power density of 4.5 W/cm² with a reverse pulse width of 2 µsec by using a mixed target of zinc oxide and titanium oxide [zinc oxide:titanium oxide=80:20 (mass ratio)] and introducing argon gas having 10 vol% of oxygen gas mixed. By the zinc oxide film and the zinc oxide/titanium oxide mixed film thus obtained, an oxide layer (i.e. a fifth metal compound film) was formed.

Then, on the uppermost oxide layer (fifth metal compound film), an ITO film having a thickness of 5 nm as a protective layer, was formed by carrying out pulse sputtering under a pressure of 0.35 Pa at a frequency of 100 kHz at a power density of 1.3 W/cm² with a reverse pulse width of 1 µsec by using an ITO target [indium:tin=90:10 (mass ratio)] and introducing argon having 5 vol% of oxygen gas mixed.

Thus, a heat ray reflecting laminate film was obtained which is a heat ray reflecting laminate having an oxide layer containing titanium oxide and zinc oxide as the main components and a metal layer made of gold-silver alloy alternately laminated on a substrate and having an ITO film formed as the uppermost layer and which has a construction comprising five layers of the oxide layer and four layers of the metal layer.

### <High refractive index film>

In a vacuum tank, a TiOₓ (1<x<2) target was disposed as a sputtering target on a cathode, and the vacuum tank was evacuated to 1.3×10⁻³ Pa or less. Then, as a sputtering gas, a mixed gas of argon gas and oxygen gas was introduced. At that time, the pressure was 0.40 Pa. In this state, a reactive sputtering method was carried out by using a DC pulse power source to form a TiOₓ film in a film thickness of 55 nm on a glass substrate set in the vacuum tank, thereby to obtain a high refractive index film-formed glass sheet. Further, the refractive index of the TiOₓ film at that time was obtained from calculation based on the Snell's law and the Fresnel's law and found to be 2.41.

With respect to the heat ray reflecting laminate film and the high refractive index film-formed glass sheet prepared as described above, the reflectance in a wavelength range of from 300 to 2,500 nm was measured by a spectrophotometer (U41 00, manufactured by Hitachi Ltd.), and in accordance with JIS R3106, the visible light reflectance Rv (%) and the solar reflectance Re (%) were obtained, and in accordance with JIS Z8729, the luminance L* and chromaticities a* and b* were obtained, and the results are shown in Table 1.

**[Table 1]**

| | Rv (%) | Re (%) | L* | a* | b* |
|---|---|---|---|---|---|
| Heat ray reflecting laminate film (film-formed surface) | 7.8 | 44.5 | 32.5 | 7.5 | 6.6 |
| High refractive index film-formed glass sheet (non-film-formed surface) | 34.4 | 25.6 | 65.3 | -3.4 | 0.9 |

### <Laminated glass>

Using the heat ray reflecting laminate film and the high refractive index film-formed glass sheet obtained as described above, and separately prepared polyvinyl butyral interlayer and glass sheet, a laminated glass was prepared to have a construction of high refractive index film-formed glass sheet/interlayer/heat ray reflecting laminate film/interlayer/glass sheet sequentially from a vehicle exterior side. The reflectance, luminance and chromaticities obtained by this laminated glass were as shown in Table 2. According to Table 2, a heat ray reflecting performance was obtained which could not be realized by the heat ray reflecting laminate film or the high refractive index film-formed glass sheet alone, and besides, the value of a* showing the intensity of redness among the chromaticities, was reduced, and it was confirmed that a neutral reflected color was obtained.

**[Table 2]**

| | Rv (%) | Re (%) | L* | a* | b* |
|---|---|---|---|---|---|
| Laminated glass (vehicle exterior surface) | 22.3 | 50.6 | 54.1 | 1.6 | 8.9 |

### (Example 2)

In the same manner as in Example 1, a TiOₓ high refractive index layer was formed on the surface of the PET film having the dry cleaning treatment applied, to obtain a high refractive index film. Further, using this high refractive index film and the same heat ray reflecting laminate-formed film as in Example 1, and separately prepared polyvinyl butyral interlayer and usual glass sheet, a laminated glass was prepared to have a construction of usual glass sheet/interlayer/high refractive index film/interlayer/heat ray reflecting laminate-formed film/interlayer/usual glass sheet sequentially from a vehicle exterior side. The reflectance, luminance and chromaticities of the obtained laminated glass were as shown in Table 3. From Table 3, it was confirmed that although the effect for the solar reflectance Re was less than in Example 1, it was possible to realize a laminated glass having the heat ray reflectance improved while maintaining the neutral color, as initially intended.

**[Table 3]**

| | Rv (%) | Re (%) | L* | a* | b* |
|---|---|---|---|---|---|
| Laminated glass (vehicle exterior surface) | 18.6 | 47.4 | 49.8 | 2.4 | 9.9 |
| High refractive index film-formed glass sheet (non-film-formed surface) | 30.2 | 24.1 | 61.7 | -2.5 | 0.6 |

### (Example 3)

### <Heat ray reflecting laminate>

Firstly, on a surface of a PET film having a thickness of 100 µm as a substrate, an oxide layer of a zinc oxide/titanium oxide mixture (i.e. a first metal compound film) having a thickness of 20 nm, was formed by carrying out pulse sputtering under a pressure of 0.73 Pa at a frequency of 50 kHz at a power density of 4.5 W/cm² with a reverse pulse width of 2 µsec by using a mixed target of zinc oxide and titanium oxide [zinc oxide:titanium oxide=90:10 (mass ratio)] and introducing argon gas having 10 vol% of oxygen gas mixed.

Then, a first metal layer having a thickness of 12 nm was formed by carrying out pulse sputtering under a pressure of 0.73 Pa at a frequency of 50 kHz at a power density of 2.3 W/cm² with a reverse pulse width of 10 µsec by using a silver alloy target doped with 1.0 mass% of gold and introducing argon gas.

Then, a zinc oxide/titanium oxide mixed film having a thickness of 73 nm was formed by carrying out pulse sputtering under a pressure of 0.73 Pa at a frequency of 50 kHz at a power density of 4.5 W/cm² with a reverse pulse width of 2 µsec by using a mixed target of zinc oxide and titanium oxide [zinc oxide:titanium oxide=90:10 (mass ratio)] and introducing argon gas having 10 vol% of oxygen gas mixed. By the zinc oxide film and the zinc oxide/titanium oxide mixed film thus obtained, an oxide layer (i.e. a second metal compound film) was formed.

Then, a second metal layer having a thickness of 12 nm was formed by carrying out pulse sputtering under a pressure of 0.73 Pa at a frequency of 50 kHz at a power density of 2.3 W/cm² with a reverse pulse width of 10 µsec by using a silver alloy target doped with 1.0 mass% of gold and introducing argon gas.

Then, a zinc oxide/titanium oxide mixed film having a thickness of 73 nm was formed by carrying out pulse sputtering under a pressure of 0.73 Pa at a frequency of 50 kHz at a power density of 4.5 W/cm² with a reverse pulse width of 2 µsec by using a mixed target of zinc oxide and titanium oxide [zinc oxide:titanium oxide=90:10 (mass ratio)] and introducing argon gas having 10 vol% of oxygen gas mixed. By the zinc oxide film and the zinc oxide/titanium oxide mixed film thus obtained, an oxide layer (i.e. a third metal compound film) was formed.

Then, a third metal layer having a thickness of 16 nm was formed by carrying out pulse sputtering under a pressure of 0.73 Pa at a frequency of 50 kHz at a power density of 2.3 W/cm² with a reverse pulse width of 10 µsec by using a silver alloy target doped with 1.0 mass% of gold and introducing argon gas.

Then, a zinc oxide/titanium oxide mixed film having a thickness of 73 nm was formed by carrying out pulse sputtering under a pressure of 0.73 Pa at a frequency of 50 kHz at a power density of 4.5 W/cm² with a reverse pulse width of 2 µsec by using a mixed target of zinc oxide and titanium oxide [zinc oxide:titanium oxide=90:10 (mass ratio)] and introducing argon gas having 10 vol% of oxygen gas mixed. By the zinc oxide film and the zinc oxide/titanium oxide mixed film thus obtained, an oxide layer (i.e. a fourth metal compound film) was formed.

Then, a fourth metal layer having a thickness of 10 nm was formed by carrying out pulse sputtering under a pressure of 0.73 Pa at a frequency of 50 kHz at a power density of 2.3 W/cm² with a reverse pulse width of 10 µsec by using a silver alloy target doped with 1.0 mass% of gold and introducing argon gas.

Then, a zinc oxide/titanium oxide mixed film having a thickness of 20 nm was formed by carrying out pulse sputtering under a pressure of 0.73 Pa at a frequency of 50 kHz at a power density of 4.5 W/cm² with a reverse pulse width of 2 µsec by using a mixed target of zinc oxide and titanium oxide [(zinc oxide:titanium oxide=80:20 (mass ratio)] and by introducing argon gas having 10 vol% of oxygen gas mixed. By the zinc oxide film and the zinc oxide/titanium oxide mixed film thus obtained, an oxide layer (i.e. a fifth metal compound film) was formed.

Thus, a heat ray reflecting laminate film was obtained which is a heat ray reflecting laminate having an oxide layer containing titanium oxide and zinc oxide as the main components and a metal layer made of a gold-silver alloy alternately laminated on the substrate and which has a construction comprising five layers of the oxide layer and four layers of the metal layer.

### <High refractive index film>

In the same manner as in Example 1, a TiOₓ layer was formed in a thickness of 55 nm on a glass substrate to obtain a high refractive index film-formed glass sheet.

### <Laminated glass>

Using the heat ray reflecting film and the high refractive index film-formed glass sheet obtained as described above, in the same manner as in Example 1, a laminated glass was prepared in a construction of high refractive index film-formed glass sheet/interlayer/heat ray reflecting laminate film/interlayer/glass sheet sequentially from a vehicle exterior side. The reflectance, luminance and chromaticities of the obtained laminated glass were as shown in Table 4. According to Table 4, a heat ray reflecting performance was obtained, and further, it was confirmed that the value of a* representing the intensity of redness among the chromaticities was reduced, and it was possible to obtain a neutral reflected color.

**[Table 4]**

| | Rv (%) | Re (%) | L* | a* | b* |
|---|---|---|---|---|---|
| Laminated glass (vehicle exterior surface) | 21.2 | 50.5 | 54.0 | -7.0 | 0.4 |

### INDUSTRIAL APPLICABILITY

According to the present invention, it is possible to obtain a laminated glass having a high infrared reflecting performance while retaining a reflected color to be neutral, particularly a laminated glass having a solar reflectance Re of at least 36% and a chromaticity a* of less than 3, which is useful as a laminated glass for a vehicle such as an automobile or other various vehicles.

The entire disclosure of Japanese Patent Application No. 2011-007928 filed on January 18, 2011 including specification, claims, drawings and summary is incorporated herein by reference in its entirety.

### REFERENCE SYMBOLS

- 101, 106:: Glass sheets
- 102:: High refractive index film
- 103:: Interlayer
- 104:: Laminate having heat ray reflecting function
- 105:: Interlayer

## Claims

1. A laminated glass comprising two glass sheets and, disposed therebetween, an interlayer and a laminate having a heat ray reflecting function, wherein between the two glass sheets, a high refractive index film is further provided besides films that constitute the laminate having a heat ray reflecting function.

2. The laminated glass according to Claim 1, wherein the high refractive index film is formed in contact with either one of the two glass sheets.

3. The laminated glass according to Claim 1 or 2, wherein the high refractive index film has a refractive index within a range of from 1.90 to 2.60.

4. The laminated glass according to any one of Claims 1 to 3, wherein the laminate having a heat ray reflecting function is a multi-layered structure having a metal compound film and a metal film alternately laminated from a glass sheet side in a total of (2n+1) layers (wherein n is an integer of at least 1).

5. The laminated glass according to Claim 4, wherein the uppermost layer and the lowermost layer of the laminate having a heat ray reflecting function are metal compound films.

6. The laminated glass according to Claim 4, wherein in the laminate having a heat ray reflecting function having a metal compound film and a metal film alternately laminated from a glass sheet side in a total of (2n+1) layers (wherein n is an integer of at least 1), n is from 2 to 8.

7. A process for producing a laminated glass comprising:
a step of preparing a first glass sheet,
a step of preparing a second glass sheet,
a step of preparing an interlayer,
a step of forming a laminate having a heat ray reflecting function on a substrate,
a step of forming a high refractive index film on one surface of the first glass sheet, and
a step of interposing the interlayer and the laminate between the first glass sheet and the second glass sheet, so as to face the high refractive index film, followed by lamination processing.
